# EUROPEAN PATENT APPLICATION

(11) **EP 3 115 094 A1**
(43) Date of publication of application: **11.01.2017**
(21) Application number: 15176074.1
(22) Date of filing: 09.07.2015
(51) Int. Cl.: B01D 19/04, C01B 25/222, C01B 25/22

(54) **FOAM CONTROL COMPOSITION FOR PHOSPHORIC ACID PRODUCTION**

(71) Applicant: Rhodia Poliamida e Especialidades LTDA, CEP 05804-902 Sao Paulo - SP (BR)
(72) Inventor: Rissi Torres, Eder, 13148-914 Paulínia/SP (BR); Berger, Alexsandro, 91410-030 Porto Alegre/RS (BR)
(74) Representative: Ridray, Annabelle

(57) **Abstract**

The present invention relates to a composition containing an anionic surfactant based on an alkali salt of sulfosuccinic acid dialkylester to promote the obtention of an inverse microemulsion which is used as foam control composition in a phosphoric acid production medium. The present invention also discloses a process to produce said composition by stirring the components of such a composition to obtain a microemulsion. The invention also aims at a method for controlling foam during the production of phosphoric acid by wet process, avoiding its formation or decreasing its amount.

## Description

### FIELD OF THE INVENTION

The present invention relates to a composition containing an anionic surfactant based on an alkali salt of sulfosuccinic acid dialkylester to promote the obtention of an inverse microemulsion which is used as foam control composition in a phosphoric acid production medium. The present invention also discloses a process to produce said composition by stirring the components of such a composition to obtain a microemulsion. The invention also aims at a method for controlling foam during the production of phosphoric acid by wet process, avoiding its formation or decreasing its amount.

### BACKGROUND OF THE INVENTION

### Phosphoric acid is produced by two general routes.

In the first process called "thermal process" the raw material is the elemental phosphorous. However, this process is highly energy consuming, thus it has been abandoned in favor of the second process called "wet" route which is more economic.

The typical "wet" process for preparing phosphoric acid comprises the decomposition of phosphate rock with sulfuric acid. Tricalcium phosphate that is present in the phosphate rock is converted by reaction with concentrated sulphuric acid into phosphoric acid and insoluble calcium sulphate salt (gypsum).

Ca₃(PO₄)₂ + 3H₂SO₄ → 2H₃PO₄ + 3CaSO₄

Then, water is added and the insoluble calcium sulphate is removed, most usually by filtration, along with other insoluble impurities.

Side reactions also take place simultaneously due the presence of calcium fluoride and calcium carbonate in the phosphate rock.

3CaF₂ + SiO₂ + 3H₂SO₄ → H₂SiF₆ + 3CaSO₄ + 2H₂O

CaCO₃ + H₂SO₄ → CaSO₄ + H₂O + CO₂

The side reactions involved in the wet process of phosphoric acid release large volumes of carbon dioxide, and some hydrogen fluoride gas, resulting in the development of substantial amounts of foam. Besides that, soil organic components commonly present in phosphate rocks act as interfacial agent, giving stability to the bubbles formed.

The foam produced is critical to a safe and cost effective operation since the foam reduces the maximum volume and/or capacity of the vessel used and consequently decreases the maximum throughput and the overall productivity of the total chain process. Additionally, the process may result in overflows of foam which can lead to hazardous conditions for plant personnel due to the corrosive properties of phosphoric acid and this may create also large quantities of incompletely reacted materials foaming into the vapor condensing systems or waste disposal system, causing costly repairs and yield losses.

Several antifoams agents have been proposed to control foam generated in such process, including oil based agents, water based agents, powder defoamers, like silicone based, EO/PO based and polymers based defoamers.

The U.S. Patent 4,083,936 discloses the use of certain phosphate esters of aliphatic alcohols as defoaming agents. This phosphate ester is dispersed in water and 2.5 % of one emulsifier, like di-2-ethylhexylsulfosuccinate, is added to form an emulsion. However, the emulsion described in this document is not an inverse microemulsion but a regular emulsion. Indeed, they are using a low surfactant concentration and a high water concentration, thus the system is based on a dispersion of the oil phase in water. In other words, the continuous phase is water, and this fact does not allow the "delivery" effect of the emulsion on the reactor surface, as it will be dispersed in the whole reactor, decreasing the effectiveness of the defoamer at the top part of the vessel. Furthermore, this emulsion has only 2.5% of emulsifier, which cannot form a microemulsion, resulting in a thermodynamically unstable emulsion and consequently a phase separation over time.

In the U.S. Patent 4, 415, 472, it is proposed to use a mixture of alkali salts of succinic acid dialkylesters and higher aliphatic alcohols as defoaming agent for phosphate decomposition media. In this case, there is no production of an inverse microemulsion with oxygenated solvent in the internal phase, and therefore it is not possible to achieve an efficient and oriented effect in the foam concentrated on the reactor surface. As explained before, without the specific structure, the oxygenated solvent is not delivered efficiently, remaining dispersed in the reaction medium, and therewith the foam is not rapidly eliminated.

One of the objects of the invention is to propose an improved composition system acting as a defoamer, breaking down the foam already formed and decreasing its volume or quantity on the reactor surface.

A further object of the invention is to propose an improved composition acting as an antifoaming avoiding the foam to be formed during the process for producing phosphoric acid by decomposition of phosphate rock with sulfuric acid.

Another objective of the present invention is to propose a translucent and thermodynamically stable microemulsion, with no phase separation before reaching the point of action.

### SUMMARY OF THE INVENTION

The invention thus proposes a **foam control composition** for phosphoric acid production, by wet process, comprising at least one anionic surfactant based on an alkali salt of sulfosuccinic acid dialkylester, at least one C8-C28 fatty acid ester, at least one C8-C28 fatty acid and at least one oxygenated solvent.

The present invention also provides a **process to produce the foam control composition** by adding the fatty acid ester, the fatty acid and the alkali salt of sulfosuccinic acid dialkylester, in this specific order, stirring until complete homogenization, adding the oxygenated solvent and stirring until obtaining a microemulsion.

Also, the present invention proposes a **method for controlling foam** during a process for producing phosphoric acid by decomposition of phosphate rock with sulfuric acid, comprising the addition of the foam control composition. The method for controlling foam can be a method for decreasing the amount of foam or a method for avoiding the formation of foam.

Then, another object of the present invention is a **process for producing phosphoric acid** comprising the addition of the foam control composition, at any position of the production vessel, more preferably at the top over the reaction medium. This addition can be applied before, together or after the phosphate rock, during the decomposition step, at any position inside of a reactor vessel.

### DETAILED DESCRIPTION OF THE INVENTION

### Definitions

The expression "inverse microemulsion" in the sense of the present invention is a dispersion made of a polar compound phase comprising at least one oxygenated solvent, an oily phase comprising at least one fatty acid ester and at least one fatty acid, and a surfactant being at least the anionic surfactant based on an alkali salt of sulfosuccinic acid dialkylester, wherein the dispersed phase is the polar compound phase comprising at least one oxygenated solvent and the continuous phase is the oily phase comprising at least one fatty acid ester and at least one fatty acid.

A "fatty" according to the invention is a chain of an even number of carbon atoms chosen from 8 to 28 included.

### Foam control composition

The present invention provides a foam control composition to control the foam during the production of phosphoric acid by decomposition of phosphate rock with sulfuric acid. The foam control composition for phosphoric acid production according to the invention contains a mixture of at least one anionic surfactant based on an alkali salt of sulfosuccinic acid dialkylester, at least one C8-C28 linear or branched fatty acid ester, at least one C8-C28 linear or branched fatty acid and at least one oxygenated solvent.

In a preferred embodiment, the foam control composition according to the invention is in the form of a microemulsion, more preferably in the form of inverse microemulsion, wherein the oxygenated solvent, which acts as solubilizing agent of organic compounds foam stabilizers, is protected inside the aggregates (dispersed phase). Furthermore, the fatty acid ester present in the continuous phase promotes the delivery of the microemulsion on the reactor surface and it also acts as foam destabilizing.

Throughout this specification, the anionic surfactant acts to promote spreading of the oxygenated solvent and may also have other functions in this composition, as aggregate maker, maintaining the oxygenated solvent dispersed into the oily phase, giving the "delivery" property.

Examples of compounds falling into the scope of this term are anionic surfactants based on an alkali salt of sulfosuccinic acid dialkylester. Preferably, the alkyl groups of the dialkyl ester are similar or different and are selected from the group consisting of C6-C12 linear or branched alkyl groups and mixtures thereof. They are preferably selected from the group consisting of C6-C10 branched alkyl groups and mixtures thereof; more preferably a C8 branched alkyl group; and even more preferably 2-ethylhexyl. In a preferably embodiment the alkali salt of sulfosuccinic acid dialkylester is selected from sodium or potassium salt of sulfosuccinic acid dialkylesters and mixtures thereof, and it is more preferably selected from sodium salt of sulfosuccinic acid dialkylesters. Even more preferably the alkali salt of sulfosuccinic acid dialkylester is bis (2-ethylhexyl) sodium sulfosuccinate, also commercially available under the name DHAYSULF 70B^{®} by DHAYMERS.

In one embodiment, the foam control composition comprises the alkali salt of sulfosuccinic acid dialkylester in an amount of about 10% to 60%, preferably about 20% to 50% by weight based on the total weight of the foam control composition.

In a favorable embodiment the foam control composition according to the present invention comprises bis (2-ethylhexyl) sodium sulfosuccinate in an amount of 25% to 40% by weight based on the total weight of the foam control composition.

The fatty acid ester according to the invention is advantageously selected from the group consisting of C8-C28 linear or branched fatty acid esters. It is preferably selected from the group consisting of fatty acid esters having C8-C28 saturated or unsaturated aliphatic chains on the fatty acid part of the ester, and mixtures thereof. It is more preferably selected from the group consisting of C16-C18 saturated or unsaturated aliphatic chains on the fatty acid part of the ester. In a preferably embodiment the alcohol part of the fatty acid ester is selected from the group consisting of C2-C8 linear or branched alkyl groups, and it is more preferably selected from C3-C6 linear or branched alkyl groups. Even more preferably the fatty acid ester is isobutyl oleate, also commercially available under the name DHAYTAN IS^{®} by DHAYMERS.

One preferred embodiment is when the foam control composition according to the present invention comprises the fatty acid ester in an amount of about 20% to 60%, preferably about 30% to 50% by weight based on the total weight of the foam control composition.

The fatty acid according to the invention is selected from the group consisting of C8-C28 linear or branched fatty acids. It is preferably selected from the group consisting of C16-C18 saturated or unsaturated aliphatic fatty acids. More preferably the fatty acid is soybean fatty acid, also commercially available under the name SOFA^{®} by JIUJIANG LISHAN ENTECH Co.

In a favorable embodiment the foam control composition according to the present invention comprises the fatty acid in an amount of about 2% to 30%, preferably about 10% to 20% by weight based on the total weight of the foam control composition.

The oxygenated solvent is selected from the group consisting of aliphatic dibasic acid esters, glycerol ketals or acetals, polyalkylene glycols and mixtures thereof. It is preferably a mixture of aliphatic dibasic acid esters, and even more preferably a mixture comprising dimethyl glutarate, dimethyl succinate and dimethyl adipate, also commercially available under the name RHODIASOLV^{®} RPDE by SOLVAY. In another embodiment the oxygenated solvent is a glycerol ketal or acetal, more preferably 2,2-dimethyl-4-hydroxymethyl-1,3-dioxolane, also commercially available under the name AUGEO^{®} SL191 by SOLVAY.

In another embodiment the foam control composition according to the present invention comprises the oxygenated solvent in an amount of about 2% to 30%, preferably about 10% to 20% by weight based on the total weight of the foam control agent composition.

In a particular embodiment of the present invention, the foam control composition consists in a mixture of an anionic surfactant based on an alkali salt of sulfosuccinic acid dialkylester, a C8-C28 linear or branched fatty acid ester, a C8-C28 linear or branched fatty acid and an oxygenated solvent.

In another embodiment the foam control composition according to the present invention comprises bis (2-ethylhexyl) sodium sulfosuccinate, isobutyl oleate, soybean fatty acid and a mixture comprising dimethyl glutarate, dimethyl succinate and dimethyl adipate. Preferably the foam control composition according to the present invention comprises 25 to 40% by weight of bis (2-ethylhexyl) sodium sulfosuccinate, 30 to 50% by weight of isobutyl oleate, 10 to 20% by weight of soybean fatty acid and 10 to 20% by weight of a mixture comprising dimethyl glutarate, dimethyl succinate and dimethyl adipate.

In another embodiment the foam control composition according to the present invention comprises bis (2-ethylhexyl) sodium sulfosuccinate, isobutyl oleate, soybean fatty acid and 2,2-dimethyl-4-hydroxymethyl-1,3-dioxolane. Preferably the foam control composition according to the present invention comprises 25 to 40% by weight of bis (2-ethylhexyl) sodium sulfosuccinate, 30 to 50% by weight of isobutyl oleate, 10 to 20% by weight of soybean fatty acid and 10 to 20% by weight of 2,2-dimethyl-4-hydroxymethyl-1,3-dioxolane.

### Process for producing a foam control composition

The invention also provides a process for producing the foam control composition as described above. The process comprises the following steps:
a) Adding in a reactor the fatty acid ester, the fatty acid and the alkali salt of sulfosuccinic acid dialkylester as defined above, in this specific order;
b) Stirring the solution obtained at step (a) until complete homogenization;
c) Adding the oxygenated solvent as defined above, in the solution obtained at step (b);
d) Stirring to obtain a microemulsion.

In a particular embodiment of the present invention, the fatty acid ester, the fatty acid and the alkali salt of sulfosuccinic acid dialkylester are added with a 5-30 minutes, preferably about 15 minutes interval between each addition.

According to the invention, the fatty acid can be added in the reactor at a temperature from 40°C to 90°C.

In the step (b), the solution obtained at step (a) is advantageously stirred at a temperature of from 10°C to 90°C preferably from 20°C to 40°C and at a stirring speed of from 40 rpm to 250 rpm.

Then, according to step (c), the oxygenated solvent is added in the solution obtained at step (b) and the solution obtained at step (c) is advantageously stirred at a stirring speed of from 40 rpm to 250 rpm, during about 30 minutes, until a microemulsion is obtained.

### Method for controlling, foam

The method for controlling foam during a process for producing phosphoric acid by decomposition of phosphate rock with sulfuric acid comprises the addition of the foam control composition, at any position of the production vessel, more preferably at the top over the reaction medium. This addition can be applied before, together or after the phosphate rock is added in the reactor.

When the foam control composition is added before or together with the phosphate rock, throughout or inside of the reaction medium, the action is to prevent the foam formation formation due its presence near to the site reaction, thus the composition act as an antifoaming agent.

Adding the foam control composition after the reaction between the sulfuric acid and the phosphate rock, in other words, when the addition of the composition is in a top down fashion towards the foam, this composition acts mainly as a defoamer agent, disrupting and decreasing the foam already present at the top of the vessel.

Without being limited to theory, it is believed that in both cases, as the composition has a low density, it is directed to the reactor surface, where is the foam generated during the process for producing phosphoric acid. In this environment, the microemulsion system is disrupted, releasing the oxygenated solvent, which decreases the foam stability. This action is caused by its solubilizing effects on organic compounds present in the reaction medium, which are responsible for foam stability.

Moreover, the anionic surfactant acts as spreading agent for the fatty acid and fatty acid ester, as they are hydrophobic immiscible agents when they collided with the air bubbles of the foam they modified the surface shape of these bubbles, favoring the coalescence between them and thus breaking the water film.

### Process for producing phosphoric acid

The process for producing phosphoric acid by decomposition of phosphate rock with sulfuric acid is well known by the skilled person in the art. The phosphoric acid is produced from fluorapatite, known as phosphate rock, by the addition of concentrated sulfuric acid, as described in the following general steps:
a) Decomposition of the phosphate rock;
b) Separation of the decomposed solution obtained at step (a);
c) Purification.

In the first step, the phosphate rock is decomposed by the action of concentrated sulfuric acid and this reaction is advantageously performed at a temperature of about from 40°C to 100°C preferably from 45°C to 85°C.

The addition of the foam control composition to the reaction medium of step (a) can be applied before, together or after the addition of the phosphate rock is added in the reactor, at any position inside of the reactor vessel.

In the step (b), the solution obtained at step (a) can be separated by filtration to obtain the phosphoric acid.

Then, according to step (c), the phosphoric acid is purified for example by solvent extraction using, for example, methyl isobutyl ketone (MIBK) in which the acid is slightly soluble and concentrated to give 60% P₂O₅ content.

Other details or advantages of the invention will become more clearly apparent in the light of the examples given below.

### EXAMPLES

### Methods of measure

For the examples below, the parameters have been measured according to the foam height, ie, the lowest the height of the foam provides the highest efficiency of the foam control composition.

### Tests and results

The evaluation of foam control performance was verified by the defoaming test described below.

To implement the defoaming test, 195 g of phosphoric acid (with 27% P₂O₅) were placed in a one-liter graduate cylinder and heated up to 75°C. To this heated acid were added 15 mL of 37% hydrochloric acid.

### Example

40 µL of a foam control composition comprising 28% by weight of bis (2-ethylhexyl) sodium sulfosuccinate, 30 to 50% by weight of isobutyl oleate, 10 to 20% by weight of soybean fatty acid and 10 to 20% by weight of a mixture comprising dimethyl glutarate, dimethyl succinate and dimethyl adipate was added to this mixture of blend acids and an agitator rotating at 250 rpm was used to stir and after that 15 g of ore (rock) were added.

### Comparative Example

No foam control composition was added to this mixture of blend acids. 15 g of ore (rock) were added under stirring rotating at 250 rpm.

The foaming heights were measured at given time intervals during 60 seconds and compared.

The effectiveness of the tested foam control compositions are shown in the table I below.

| | **HEIGHT EVALUATION** | |
|---|---|---|
| **TIME (Seconds)** | **Comparative Example** | **Example** |
| 0 | * | * |
| 5 | ********* | ****** |
| 10 | **************** | ******* |
| 15 | **************** | ****** |
| 20 | ************** | ****** |
| 25 | *********** | ***** |
| 30 | *********** | **** |
| 35 | **** | **** |
| 40 | ** | *** |
| 45 | * | ** |
| 50 | * | * |
| 55 | * | * |
| 60 | * | * |

The number of asterisks (*) represents, semiquantitatively the height of foam.

### Conclusion

The above results show that the foam control composition described in this invention disrupts more quickly the foam generated in the process, having lower foam height during the first seconds and, in addition, prevent the foam generation, keeping the lowest foam level over time.

## Claims

1. **Foam control composition** comprising:
a) at least one anionic surfactant based on an alkali salt of sulfosuccinic acid dialkylester;
b) at least one C8-C28 linear or branched fatty acid ester;
c) at least one C8-C28 linear or branched fatty acid and
d) at least one oxygenated solvent.

2. Composition according to claim 1 wherein the composition is in the form of a microemulsion, preferably an inverse microemulsion.

3. Composition according to claims 1 or 2, wherein the alkyl groups of the dialkyl ester of the alkali salt of sulfosuccinic acid dialkylester are similar or different and are selected from the group consisting of C6-C12 linear or branched alkyl groups and mixtures thereof, preferably C6-C8 branched alkyl groups, preferably 2-ethylhexyl.

4. Composition according to anyone of claims 1 to 3, wherein the alkali salt of sulfosuccinic acid dialkylester is present in an amount of about 10% to 60%, preferably about 20% to 50% by weight based on the total weight of the foam control composition.

5. Composition according to anyone of claims 1 to 4, wherein the fatty acid part of the fatty acid ester is selected from the group consisting of C16-18 saturated or unsaturated aliphatic chains and mixtures thereof, and the alcohol part of the fatty acid ester is selected from the group consisting of C2-C8 linear or branched alkyl groups and mixtures thereof, preferably the fatty acid ester is isobutyl oleate.

6. Composition according to anyone of claims 1 to 5, wherein the fatty acid ester is present in an amount of about 20% to 60%, preferably about 30% to 50% by weight based on the total weight of the foam control composition.

7. Composition according to anyone of claims 1 to 6 wherein the fatty acid is selected from the group consisting of C16-18 saturated or unsaturated aliphatic fatty acids and mixtures thereof, preferably the fatty acid is soybean fatty acid.

8. Composition according to anyone of claims 1 to 7, wherein the fatty acid is present in an amount of about 2% to 30%, preferably about 10% to 20% by weight based on the total weight of the foam control composition.

9. Composition according to anyone of claims 1 to 8, wherein the oxygenated solvent is selected from the group consisting of aliphatic dibasic acid esters, glycerol ketals or acetals, polyalkylene glycols, and mixtures thereof.

10. Composition according to anyone of claim 1 to 9, wherein the oxygenated solvent is a mixture of aliphatic dibasic acid esters, preferably a mixture comprising dimetyl glutarate, dimethyl succinate and dimethyl adipate.

11. Composition according to anyone of claim 1 to 10, wherein the oxygenated solvent is a glycerol ketal or acetal, preferably 2,2-dimethyl-4-hydroxymethyl-1,3-dioxolane.

12. Composition according to anyone of claims 1 to 11, wherein the oxygenated solvent is present in an amount of about 2% to 30%, preferably about 10% to 20% by weight based on the total weight of the foam control composition.

13. **Process for producing a foam control composition** as defined in anyone of claims 1 to 12 comprising the following steps:
a) Adding in a reactor the fatty acid ester, the fatty acid and the alkali salt of sulfosuccinic acid dialkylester, in this specific order;
b) Stirring the solution obtained at step (a) until complete homogenization;
c) Adding the oxygenated solvent in the solution obtained at step (b);
d) Stirring to obtain a microemulsion.

14. **Method for controlling foam** during a process for producing phosphoric acid by decomposition of phosphate rock with sulfuric acid, said method comprising the addition of a foam control composition as defined in anyone of claims 1 to 12.

15. **Process for producing phosphoric acid** comprising the following steps:
a) Decomposition of the phosphate rock;
b) Separation of the decomposed solution obtained at step (a);
c) Purification.
wherein the foam control composition as defined in anyone of claims 1 to 12 is added before, together or after the phosphate rock in the decomposition step, at any position inside of a reactor vessel.
